# EUROPEAN PATENT APPLICATION

(11) **EP 4 836 405 A1**
(43) Date of publication of application: **04.11.2026**
(21) Application number: 25305610.5
(22) Date of filing: 29.04.2025
(51) Int. Cl.: H04N 19/13, G06N 3/045, H04N 19/91

(54) **METHODS AND DEVICES FOR MIXED CORE CODEC AND HYBRID INR CODING**

(71) Applicant: InterDigital CE Patent Holdings, SAS, 75017 Paris (FR)
(72) Inventor: SCHNITZLER, Francois, 56890 SAINT AVE (FR); DAMODARAN, Bharath Bhushan, 56000 VANNES (FR); LAMBERT, Anne, 35250 SAINT-AUBIN-D'AUBIGNE (FR)
(74) Representative: Interdigital

(57) **Abstract**

In various implementations, methods and devices are disclosed that encode or decode a signal wherein a core codec is used for coding a part of a signal and a hybrid INR is used for coding another part of the signal. A pseudo latent generation function is determined for the signal parts processed by the core codec and pseudo latent variables are obtained by applying the pseudo latent generation function to the core codec decoded signal parts. The remaining parts of signal may be processed by a hybrid INR model using pseudo latent variables as spatial context to generate latent variables and parameters of the hybrid INR.

## Description

### BACKGROUND

The present application is related to image, video and/or 3D scene compression combining data coded with traditional standardized codec (core codec) and neural network based end-to-end codec such as hybrid INR. The present embodiments relate to a method and an apparatus for encoding, decoding, transmitting a signal with a part of the signal coded by a core codec and another part of the signal coded by a hybrid INR, wherein pseudo latent variables are obtained for signal parts that use the core codec by applying a pseudo latent generation function to the decoded parts using a core codec.

### BRIEF SUMMARY

In various implementations, methods and devices are disclosed that indicate to a decoder a pseudo latent generation function used to generate pseudo latent variables of a hybrid INR model for the decoded parts of the signal using a core codec.

Briefly stated, in one embodiment a method of encoding is disclosed that comprises partitioning a signal into a plurality of parts; determining, for each part of the signal, whether a hybrid INR or a core codec is used for coding the part of the signal; encoding, into a bitstream, information representative of the signal partitioning and encoding, for each part of the signal, an indication of whether the hybrid INR or the core codec is used for encoding the respective part of the signal; encoding, into the bitstream, the signal parts that use the core codec and obtain respective decoded signal parts; determining a pseudo latent generation function for the respective reconstructed signal parts and obtaining pseudo latent variables by applying the pseudo latent generation function to the respective decoded signal parts; training a hybrid INR model using pseudo latent variables to generate latent variables and parameters of the hybrid INR for the signal parts that use the hybrid INR; and encoding, into the bitstream, information representative of the determined pseudo latent generation function, information representative of latent variables and parameters of the hybrid INR for the signal parts that use the hybrid INR.

One embodiment also provides a method of decoding that comprises obtaining a bitstream carrying a coded signal wherein a core codec is used for coding a part of a signal and a hybrid INR is used for coding another part of the signal, the bitstream further comprising information representative of a signal partitioning into a plurality of signal parts, an indication of whether an hybrid INR or a core codec is used for coding a respective signal part, information representative of a pseudo latent generation function, information representative of latent variables and parameters of the hybrid INR; decoding, from the bitstream, the signal parts that use the core codec responsive to the indication that a core codec is used for coding the respective signal part; decoding, from the bitstream, parameters of the hybrid INR; obtaining pseudo latent variables by applying the pseudo latent generation function to the decoded signal parts that use the core codec; decoding, from the bitstream, latent variables using pseudo latent variables; obtaining, the signal parts that use the hybrid INR responsive to the indication that a hybrid INR is used for coding the respective signal part, from the decoded latent variables, a hybrid INR model using the decoded parameters of the hybrid INR.

One or more embodiments also provide an apparatus for video encoding, decoding or rendering comprising one or more processors and at least one memory coupled to said one or more processors, wherein said one or more processors are configured to perform the encoding, decoding or rendering method according to any of the embodiments described herein.

One or more embodiments also provide a computer program comprising instructions which when executed by one or more processors cause the one or more processors to perform the encoding, decoding or rendering method according to any of the embodiments described herein. One or more of the present embodiments also provide a computer readable storage medium having stored thereon instructions for encoding, decoding or rendering a video according to the methods described herein.

One or more embodiments also provide a computer readable storage medium having stored thereon video data generated according to the methods described above. One or more embodiments also provide a method and apparatus for transmitting or receiving the video data generated according to the methods described herein

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a diagram illustrating an example INR network according to one or more embodiments of the present disclosure;
FIG. 3 is a block diagram illustrating an example video encoder;
FIG. 4 is a block diagram illustrating an example video decoder;
FIG. 5 is a block diagram illustrating an example hybrid INR model;
FIG. 6 is a block diagram illustrating an example video encoder applying a Hybrid INR model;
FIG. 7 is a block diagram illustrating an example video decoder applying a Hybrid INR model;
FIG. 8 is a diagram illustrating prediction of a latent variable distribution, using a spatial context according to one or more embodiments of the present disclosure;
FIG. 9 is a block diagram illustrating an example video encoder applying a predictive hybrid INR model according to one or more embodiments of the present disclosure;
FIG. 10 is a block diagram illustrating an example video decoder 1000 applying a predictive hybrid INR model according to one or more embodiments of the present disclosure;
FIG. 11 is a diagram illustrating the concept of a pseudo latent according to one or more embodiments of the present disclosure;
FIG. 12 is a block diagram illustrating an encoding method according to one or more embodiments of the present disclosure;
FIG. 13 is a block diagram illustrating a decoding method according to one or more embodiments of the present disclosure; and
FIG. 14 is a block diagram illustrating a decoding method according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

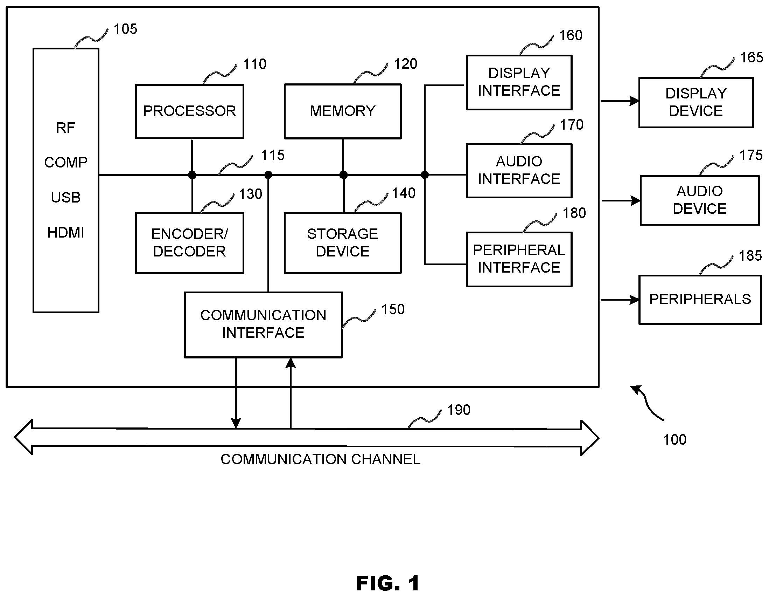

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Recent improvements to video compression technology includes neural network compression. Implicit Neural Representation (INR) is one neural network-based compression method that has recently emerged among other studied techniques. An INR network is trained to predict a pixel value of an image, *x*(*i, j*), based on the pixel's coordinates (i,j) - that is,*f_{θ}*(*i, j*) *=* (*r, g, b*) (or *f_{θ}*(*i, j*) *=* (*y, u, v*)) where *f_{θ}* denotes the INR network operation and *θ* the INR network parameters.

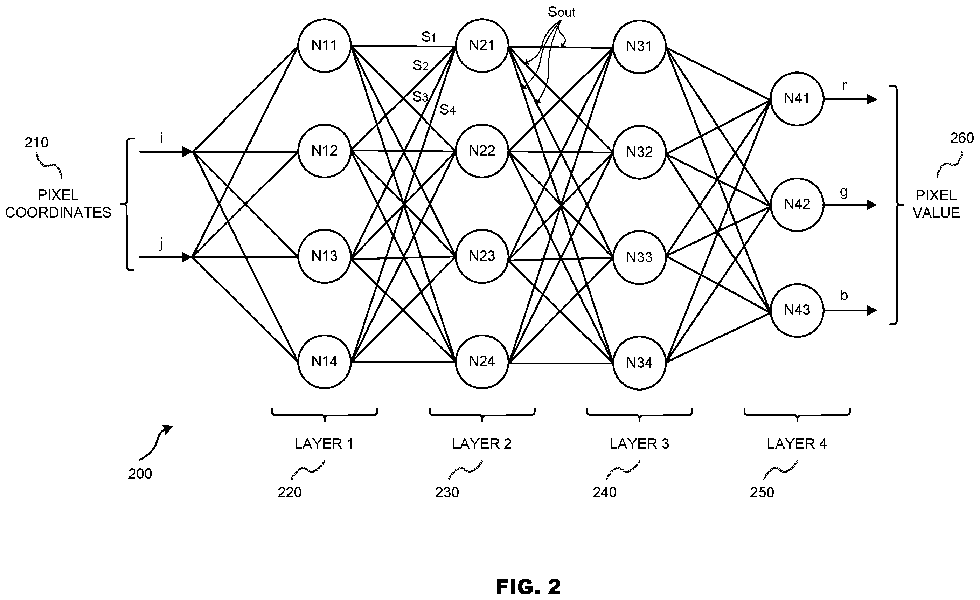

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (i,j) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x,* respectively, *r, g,* and *b* (or color component values of any other color model, such as *y*, *u*, and *v*)*.*

Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ (1) where, *L* denotes the number of input signals (i.e., the number of nodes from the previous layer that connect to the node), *s =* {*sᵢ* : *i* = 1 *to L}* denotes the node's input signal vector, *sₒᵤₜ* denotes the node's output signal, p *=* {*pᵢ* : *i* = 0 *to L*} denotes the node's parameter vector (or weight vector), and A denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ}*, is therefore defined by the network parameters *θ*.

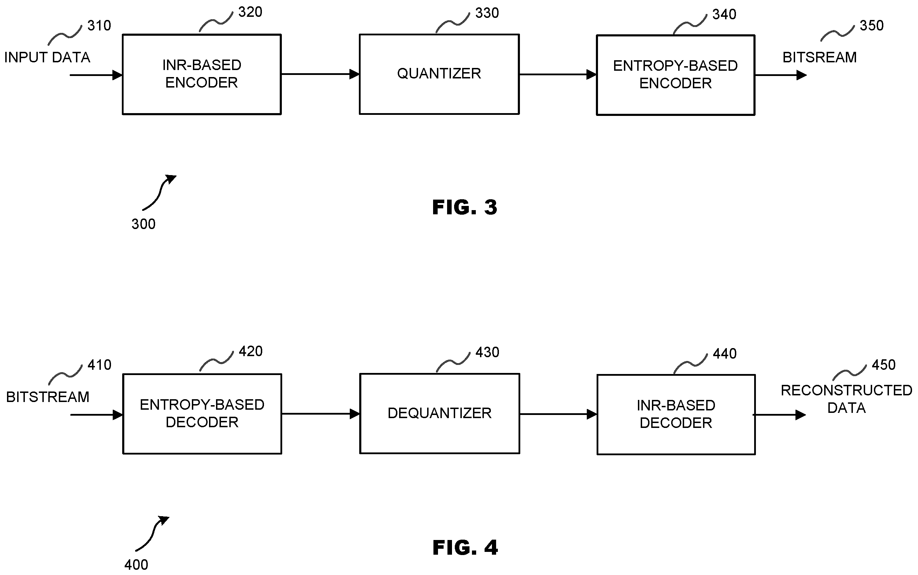

Hence, an INR network 200 is trained to predict a pixel value of an image, *x*(*i, j*), based on the pixel's coordinates (*i*, *j*) - that is, *f_{θ}*(*i, j*) *=* (*r, g, b*) (or *f_{θ}*(*i, j*) *=* (*y, u, v*))*.* During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ (2) where, D is a distortion measure, measuring the fidelity of the estimated pixel values, provided by *f_{θ}*, relative to the ground truth, that is, the corresponding pixel values from the original image, denoted by ***x***. And, where *R* is the resulting bitrate of the encoded parameters *θ* (e.g., encoded by quantization and entropy coding as discussed with respect to FIG. 3). A trade-off parameter *λ* can be set to determine the balance between *D* and *R*. Note that the distortion measure *D* can be any metric that measure the distance (or similarity) between the original image ***x*** and its estimated version provided by *f_{θ}*, such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ (3) where, *W* and *H* are the width and height of the image *x* that the INR network is trained to predict. The optimization of the network parameters *θ*, according to equation (2), is typically performed by a machine learning optimization technique, applying, for example, a batch gradient descent algorithm. Following the training of the INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ}*, representative of the INR network, to determine the optimal network parameters *θ*. For example, for an input image with dimensions *W* and *H, W* times *H* pairs of pixel coordinates (*i*, j) and corresponding pixel values ***x***(*i, j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H =* 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

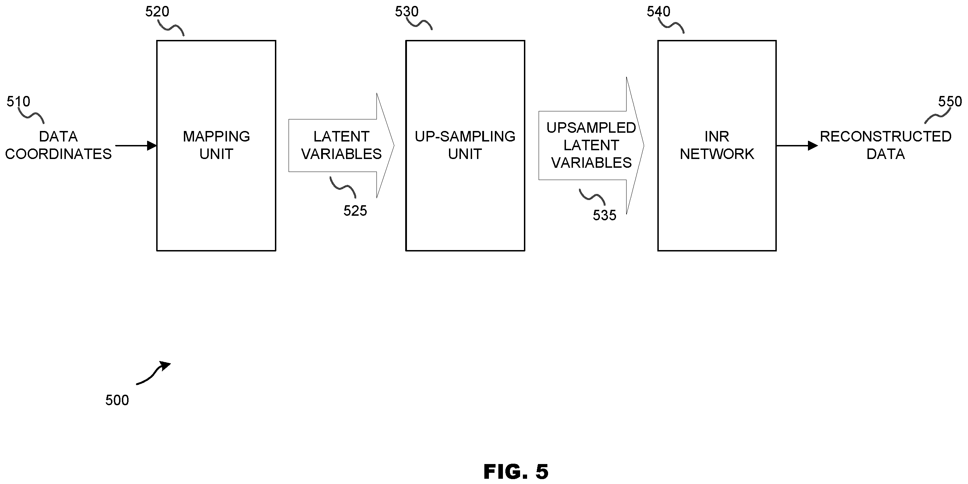

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR model 500. In an aspect, this hybrid INR model 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525. The mapping can be implemented by a lookup table or a hash function, for example. The mapping may also involve any transformation, such as a Fourier transformation, a coordinate transformation, a normalization transformation, or a combination thereof. The latent variables 525 can be up-sampled, by an up-sampling unit 530, resulting in up-sampled latent variables 535. The up-sampled latent variables are used as an input to a neural network 540 (e.g., such as INR network 200), trained to produce the reconstructed data 550. We will also denote this network the synthesis network. In a hybrid-INR model 500 the latent variables 525 are trained together with the parameters *θ* of the neural network 540, resulting in optimal network parameters and optimal latent variables. If applicable, some parameters of at least one transformation could be trained as well. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR model 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained synthesis network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained synthesis network 540 using the decoded and dequantized network parameters of the synthesis network.

A hybrid INR model, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune as in many hybrid INR models, the latent variables are arranged in hierarchical layers (or channels) ranging from a low-resolution representation (that provides for compact representation of smooth image regions) to a high-resolution representation (that captures the fine details of the image).

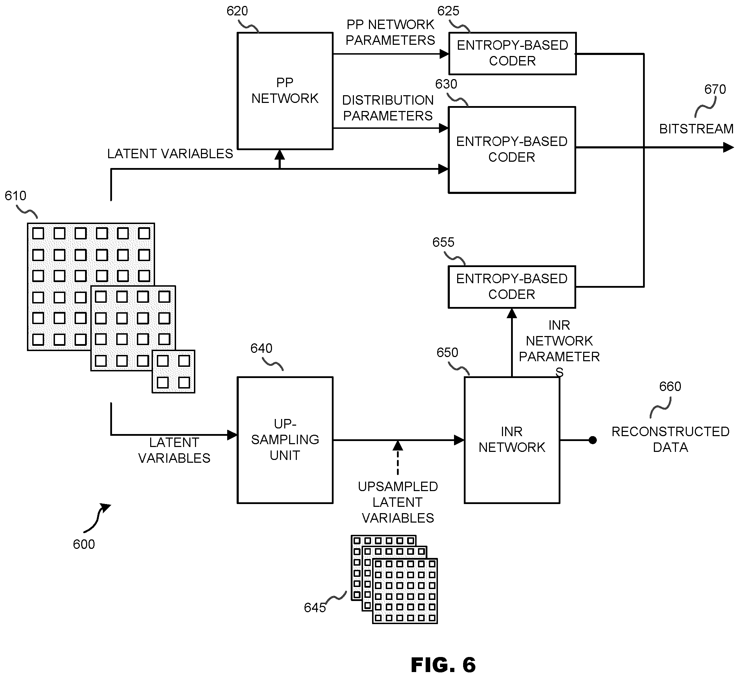

In hybrid INR models, the latent variables, denoted by y, are typically the largest contributor to the bitrate (several orders of magnitude larger than that contributed by the synthesis network parameters). One approach to reduce the transmission cost of these latent variables is to entropy code these variables based on their learned distributions, as described in Ladune. Principles of the hybrid INR model proposed in Ladune are described below in reference to FIGS. 6-8.

FIG. 6 is a block diagram illustrating an example video encoder 600 applying a hybrid INR model. The encoder 600 includes a probability prediction (PP) network 620, an up-sampling unit 640, a synthesis network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. This reconstructed image is obtained by using the up-sampled latent variables 645 as input of the synthesis network 650. Together with the up-sampled latent variables 645, the synthesis network 650 is trained (overfitted) to produce reconstructed data 660 (e.g., a reconstructed image of a video frame). The training results in optimal INR synthesis network parameters *θ* that are coded, by the entropy-based coder 655, into the bitstream 670. In an inference mode, reconstructing the data (e.g., by a decoder 700) involves feeding the trained INR synthesis network, defined by the optimal network parameters *θ*, with the up-sampled latent variable. And so, in addition to the network parameters *θ*, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by ψ, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the synthesis network parameters rely on respective non-learned distributions. In an aspect, for some of the latent variables, respective non-learned distributions can be used by the entropy-based coder 630. These non-learned distributions may be fixed distributions or may be distributions that was learned with respect to other latent variables (e.g., latent variables representing data from previous frames).

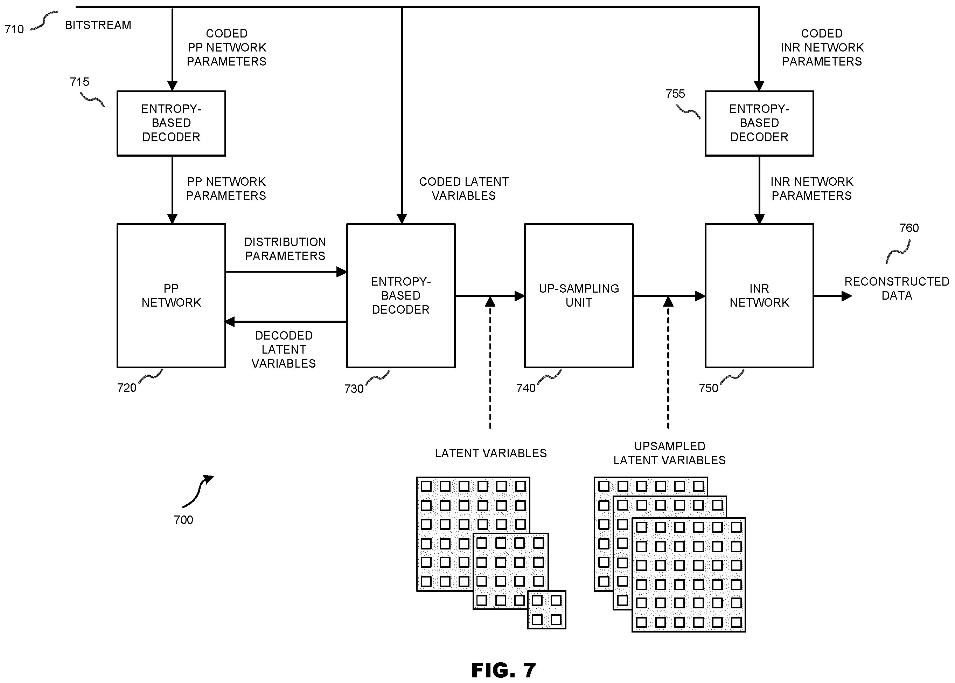

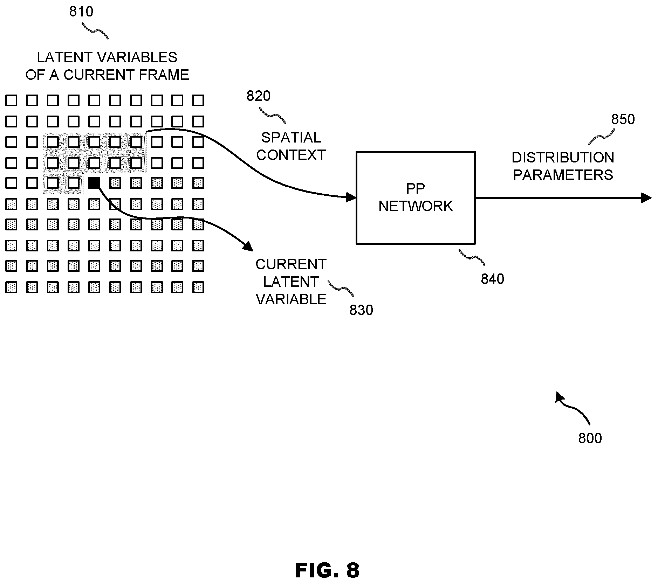

FIG. 7 is a block diagram illustrating an example video decoder applying a hybrid INR model 700. The decoder 700 includes a PP network 720, an up-sampling unit 740, an INR synthesis network 750, and entropy-based decoders 715, 730, 755. The PP network 720 produces distribution parameters of respective latent variables. The PP network 720 operates based on learned PP network parameters ψ, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable (as further described in reference to FIG. 8). The decoded latent variables are then up-sampled by the up-sampling unit 740 (as performed by the up-sampling unit 640 at the encoder 600). Fed by the up-sampled latent variables, the synthesis network 750 reconstructs the data 760 (e.g., a reconstructed image of a video frame) it is trained to synthesize based on the INR synthesis network parameters, decoded from the bitstream 710 by the entropy-based decoder 755.

The operation of the hybrid INR model is further explained with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR model 650, 750 utilizes a hierarchical representation that includes multiple layers of different spatial resolutions 610. Each layer represents an image ***x*** with a width *W and* a height *H* with a corresponding level of detail. Formally, the discrete latent variables, denoted by *ŷ*, can include *K* layers of latent variables: *ŷ =* {*ŷₖ* , *k* = 0: (*K* - 1)}. Each layer *ŷₖ* is of width *W*/2*^{k}* and of height *H*/2*^{k}.* During the up-sampling 640, each layer *ŷₖ* may be up-sampled by a factor of 2*^{k}* (using any interpolation method) to obtain the up-sampled layer version, denoted by *ẑₖ* . Together, the up-sampled layers, *ẑ* = {*ẑₖ* , *k =* 0: (*K -* 1)}, result in a dense 3D representation 645 of dimension *W* by *H* by *K.* Thus, the synthesis network 650 can be trained based on *W* by *H* inputs of *ẑ*(i, j), where each input can include up to *K* latent variables, that is, *ẑ*(i, j) *=* {*ẑ*(i, j, *k), k* = 0: (*K* - 1))}. For example, the trained synthesis network 750 can be used to predict a reconstructed pixel ***x̂***(*i,* j), of the original pixel ***x***(*i, j*), by ***x̂***(*i, j) = f**_{θ}***(*ẑ*(i, j))*.* In an aspect, depending on the desired bitrate, not all the layers of the latent variables may be used to represent (code) an image ***x.***

When compressing an image x the goal is to do so while minimizing a cost function, as discussed with respect to equation (2). In the case of a hybrid INR model, the cost of coding an image can be expressed as: $Cost = D \left(x,{f}_{θ}\left(\hat{z}\right)\right) + λR \left(\hat{y}, θ, ψ\right) ,$ (4) where ***x*** denotes an image to be coded with *H* hight, W width, and *F* color channels; where *ŷ* denotes the quantized latent variables and *ẑ* denotes their up-sampled version; where *f**_{θ}*** denotes the synthesis network 650, 750 and *θ* denotes the synthesis network parameters; where *f*_{ψ} denotes the PP network 620, 720 and ψ denotes the PP network parameters; where *D* denotes a distortion metric measuring the distance between the image ***x*** and its reconstructed version ***x̂***, as produced by the synthesis network *f**_{θ}*** from the up-sampled latent variables *ẑ*, that is, ***x̂*** *= f**_{θ}***(*ẑ*); and where *R* denotes the rate (in bits per pixel) measuring the number of bits that are required to represent a pixel in a bitstream, that is, the number of bits that are required to represent *ŷ*, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

The objective, thus, is to find the latent variables *ŷ*, the synthesis network parameters *θ*, and the PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$ (5)

Since the contribution of the synthesis network parameters *θ* and the PP network parameters ψ to the rate *R* is not as significant as that of the latent variables *ŷ*, only the latter can be considered when minimizing the coding cost, that is, *R*(*ŷ, θ*, ψ ) ≈ *R*(*ŷ*)*.* Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ {log}_{2} {P}_{ψ}\left(\hat{y}\right)\right) ,$ (6) where *P*_{ψ}(*ŷ*) is the joint distribution of the latent variables *ŷ*. According to Equation (6), minimizing the cost involves minimizing the rate associated with the latent variables. This can be achieved by reducing the amount of information contained in the latent variables, at the price of a less accurate reconstruction, as less information in *ŷ* is likely to increase the distortion *D.* Alternatively, minimizing the cost can be achieved by obtaining estimates of the distributions of the respective latent variables, as described herein.

Due to the high dimensionality of the latent variables, modeling of the joint distribution of *ŷ*, *P*_{ψ}(*ŷ*), is not tractable. Instead, *P*_{ψ}(*ŷ*) can be factorized as follows: ${P}_{ψ} \left(\hat{y}\right) = {\prod }_{i , j , k} {p}_{ψ} \left({\hat{y}}_{ijk}\left|{c}_{ijk}^{s}\right.\right) ,$ (7) where ${p}_{ψ} \left({\hat{y}}_{ijk}\left|{c}_{ijk}^{s}\right.\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k*. The spatial context ${c}_{ijk}^{s}$ may be provided by spatially neighboring latent variables that have already been decoded, and preferably selected in a way that enables parallel decoding of the different layers of the latent variables (e.g., in a wavefront-like approach). In practice, the discrete distribution ${p}_{ψ} \left({\hat{y}}_{ijk}\left|{c}_{ijk}^{s}\right.\right)$ can be modeled by integrating the continuous distribution of the non-quantized latent variable, denoted by *g*(*y*) and modeled as a Laplacian distribution, for example. Thus, the PP network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left({\hat{y}}_{ijk}\left|{c}_{ijk}\right.\right) = {\int }_{{\hat{y}}_{ijk} - 0.5}^{{\hat{y}}_{ijk} + 0.5} g \left(y\right) dy ,$ (8) where g ≅ 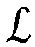 (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} *=* f_{ψ}(cᵢⱼₖ), as described next with respect to FIG. 8.

FIG. 8 is a diagram illustrating prediction of a latent variable distribution, using a spatial context 800. For simplicity of the presentation, only one layer of the latent variables 810 is illustrated, however, processes applied to this layer can be similarly applied to the other layers. The example of FIG. 8 illustrates the process of predicting a distribution of a current latent variable (indicated by a black square) to be coded (e.g., by encoder 600 or 900) or to be decoded (e.g., by decoder 700 or 1000). However, when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable at position (*i*, *j, k*), latent variables can be selected within a neighborhood located relative to position (*i, j, k*) (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable. The distribution of the current latent variable is predicted by estimating the parameters of that distribution (e.g., {µᵢⱼₖ, σᵢⱼₖ}). To that end, in the encoder, the PP network 840 is trained to produce, for each latent variable, the distribution parameters 850 based on the respective spatial context. This training can be done by minimizing the coding cost expressed in equation (6). The training of the PP network 840 results in the PP network parameters ψ. In the decoder, the trained PP network 840 is operated in an inference mode to produce, for each latent variable, the distribution parameters 850 from the respective spatial context. The trained PP network 840 operates based on the PP network parameters ψ determined by the encoder during training and provided to the decoder in the bitstream.

In the case of a video stream, for example, a hybrid INR model can be used to represent each image of a video frame by a set of latent variables, *ŷ*, that (together with the PP network parameters ψ and the synthesis network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR model applicable to individual frames (see, Leguay et al., Cool-chic video: Learned video coding with 800 parameters, Data Compression Conference (DCC) 2024, IEEE, pp 23-32, 2024, hereinafter "Leguay").

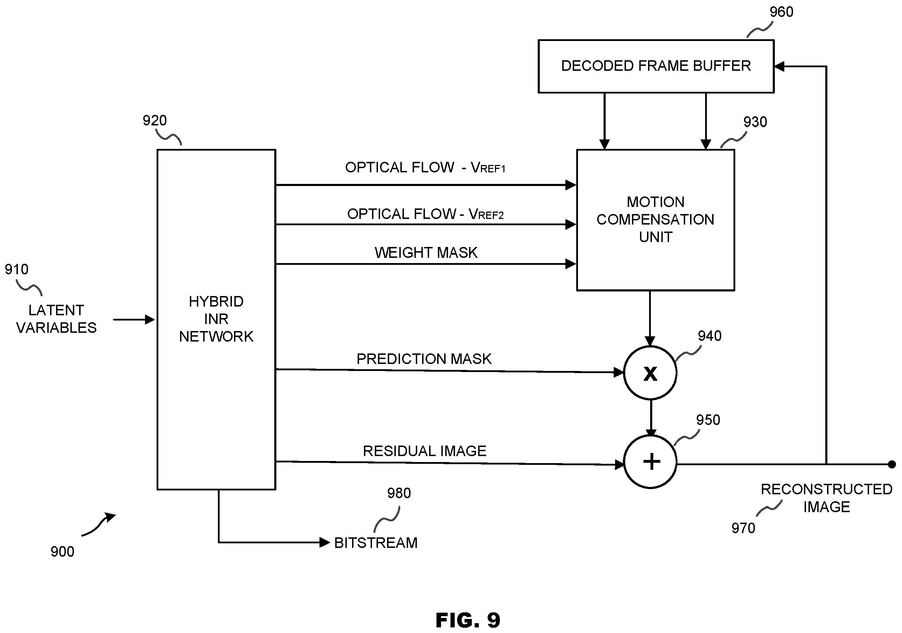

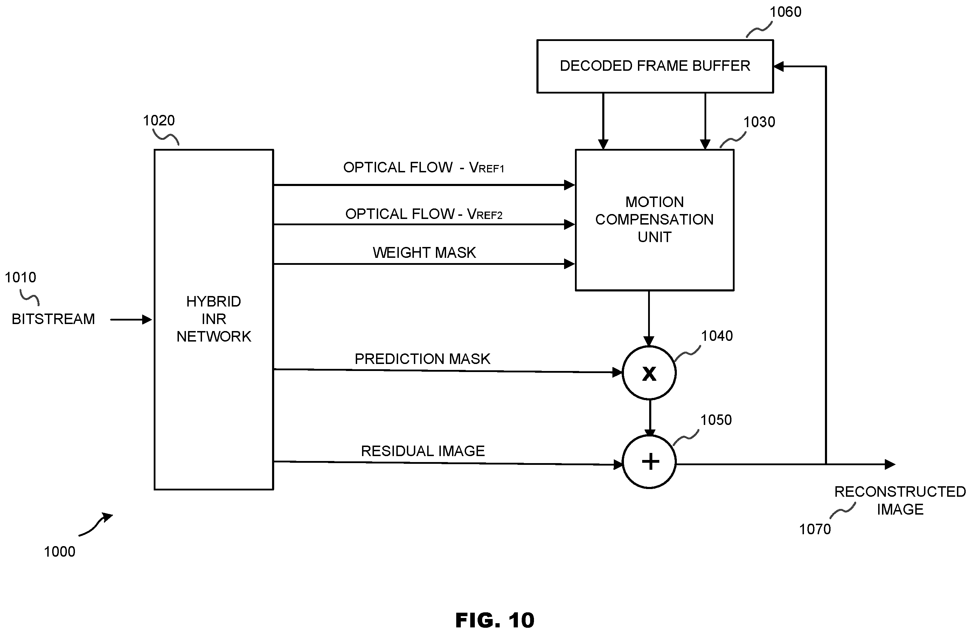

Principles of the predictive hybrid INR model proposed in Leguay are described next in reference to FIGS. 9 and 10. The operation of the predictive hybrid INR model is explained herein with respect to an image ***x*** of a video frame, however, ***x*** may represent other types of data (such as a surface or a volume) that can be associated with a frame. Note that latent variables representative of data regions (e.g., pixels) from a data frame (e.g., a video frame) referred to herein also as corresponding to that data frame.

FIG. 9 is a block diagram illustrating an example video encoder 900 applying a predictive hybrid INR model. The encoder 900 receives, as an input, latent variables 910 and outputs a bitstream 980. The encoder 900 includes a hybrid INR model 920, a motion compensation unit 930, a multiplier 940, an adder 950, and a decoded frame buffer 960. The hybrid INR model 920 generally operates (in a training mode) as the hybrid INR model described in reference to FIG. 6. However, in this case the hybrid INR model is trained to produce two optical flows, *v*_{*ref*1} and *v*_{*ref*2}, a weight mask *β*, a prediction mask ∝, and a residual image ***r**.* The optical flows represent the pixel-wise motion between respective reference frames (already reconstructed images 970, stored in the decoded frame buffer 960) and the current frame. And so, the motion compensation unit 930 can use these optical flows to generate a prediction, denoted by ***x̃***, of the currently coded image x, as follows: ${x}^{˜} = β ⋅ warp \left({\hat{x}}_{ref , 1}, {v}_{ref 1}\right) + \left(1-β\right) ⋅ warp \left({\hat{x}}_{r ef 2}, {v}_{ref 2}\right) ,$ (9) where *warp* is an operator that warps (i.e., spatially maps) an image into another image based on motion vectors given by an optical flow. Specifically, a first reference image, *x̂*_{*ref*1}, is warped into a first prediction, ***x̃*₁** = *warp*(***x̂***_{*ref*1}, *v*_{*ref*1}) and a second reference image, ***x̂***_{*ref*2} is warped into a second prediction, ***x̃*₂** = *warp*(***x̂***_{*ref*2}, *v*_{*ref*2})*.* Using elementwise multiplication, denoted by "·", the two predictions are then blended by the mask *β*, yielding the prediction image ***x̃***. As illustrated in FIG. 9, the prediction image ***x̃*** (output of the motion compensation unit 930) is then corrected by the residual image r, as follows: $\hat{x} = r + ∝ ⋅ {x}^{˜} ,$ (10) where, the prediction mask ∝ is a binary mask that can be used to mask out 940 a prediction pixel if it does not reliably predict the corresponding pixel in x. Adding 950 the masked prediction image, ∝· ***x̃***, to the residual image ***r*** produces the reconstructed image 970, ***x̂**.*

Hence, the two optical flows, *v*_{*ref*1} and *v*_{*ref*2}, the weight mask *β*, the prediction mask ∝, and the residual image ***r*** can be learned by minimizing the coding cost expressed in equation (4), where *f**_{θ}***(*ẑ*) *= **x̂** = **r***+∝· ***x̃**.* Note that the predictive hybrid INR model, illustrated in FIG. 9, can be applied using only one reference image or any number of reference images available in the decoded frame buffer 960. In such a case equation (9) can be expressed as: ${x}^{˜} = {\sum }_{q = 1}^{Q} {β}_{q} ⋅ warp \left({\hat{x}}_{ref q}, {v}_{ref q}\right) ,$ (11) Where, Q is the number of reference images used; where ${\sum }_{q = 1}^{Q} {β}_{q}$ is equal to an all-ones matrix. where *v*_{*ref*q} is the optical flow with respect to ***x̂***_{*ref*q}, that is, the *q^{th}* reference image. In a variant, the weight mask *β*, the prediction mask oc, or both can be removed from the predictive hybrid INR model.

FIG. 10 is a block diagram illustrating an example video decoder 1000 applying a predictive hybrid INR model. The decoder 1000 receives, as an input, a bitstream 1010 and outputs reconstructed images 1070. The decoder 1000 includes a hybrid INR model 1020, a motion compensation unit 1030, a multiplier 1040, an adder 1050, and a decoded frame buffer 1060. The hybrid INR model 1020 generally operates (in an inference mode) as the hybrid INR model described in reference to FIG. 7. However, in this case the hybrid INR model produces two optical flows, *v*_{*ref*1} and *v*_{*ref*2}, a weight mask *β*, a prediction mask ∝, and a residual image ***r**.* The optical flows represent the pixel-wise motion between respective reference frames (already reconstructed images 1070, stored in the decoded frame buffer 1060) and the current frame. And so, the motion compensation unit 1030 can use these optical flows to generate a prediction, denoted by ***x̃***, of the currently decoded image ***x**,* as expressed by equation (9). As illustrated in FIG. 10, the prediction image ***x̃*** (output of the motion compensation unit 1030) is then corrected by the residual image r, as shown by equation (10). Adding 1050 the masked prediction image, ∝· ***x̃***, to the residual image ***r*** produces the reconstructed image 1070, ***x̂***.

Recently, it has been proposed to combine traditional codec with machine learning based codec by allowing the encoder to choose between a traditional codec such as VTM (a codec developed for VVC) and a neural network-based auto encoder as the hybrid INR approach described above. According to a first variant, the VTM encoder may decide for each I-Frame whether the standard VTM frame is used or a frame coded with the I-Frame coder of an auto-encoder based neural network encoder is used. In a refinement of the first variant has also been proposed to use an auto-encoder based neural network encoder for part of the I-frame. According to a second variant, a neural network encoder may be used to code for I-frames and VTM for inter frames. For instance, a European Patent Application 25305229.4, filed on 20-Dec-2025 by the same applicant, discloses a bitstream that contains additional information necessary for encoding a video when using end-to-end codec to code all or a part of an I-frame using an end-to-end codec, additional information includes a new SEI syntax while the remaining of the video is coded using a traditional codec (i.e. core codec).

Besides, it is known that hybrid INR approaches may use previously encoded/decoded latent value as a context to better predict and encode/decode the next latent value to be entropy coded. However, when encoding some parts of a signal (e.g. a frame) using either a hybrid INR model or another codec (such as a traditional codec or core codec), signal parts encoded using the other codec will not have any latent value available to provide the context, leading to potentially suboptimal encoding of the latent values for the parts where a hybrid INR is used.

Accordingly, the present principles propose obtaining a context from signal parts encoded using the other codec. Advantageously, this context may then be used to encode/decode the latent values for the parts of the signal where a hybrid INR is used. According to variant embodiments, latent values are obtained from parts of the signal encoded using the other codec by:
- using a default value;
- generating such values by applying a model on these parts, where this model may either be known to the encoder/decoder or chosen/optimized by the encoder and sent to the decoder with the signal;
- generating such values by optimizing them based on the hybrid-INR model.

In the following, the generated latent values are called pseudo latent values.

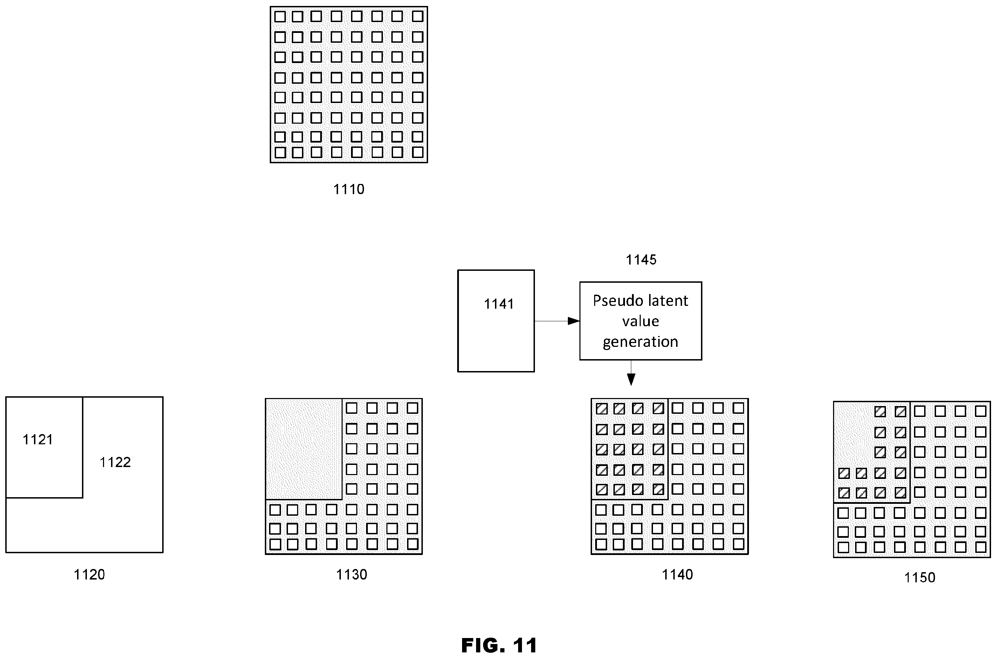

FIG. 11 is a diagram illustrating the concept of a pseudo latent according to one or more embodiments of the present disclosure. For clarity, the concept illustrated in FIG. 11 comprises one single level of latent grid. However, the skilled in the art will easily generalize the concept to multiple levels of latent. When a signal (e.g. a frame) is fully encoded by a hybrid INR codec, the full signal is covered by the latent grid 1110. When encoding these latent values, a context is used by the PP network to predict a distribution over the next value to be encoded. As explained with FIG. 8, this context is constructed by gathering latent values that have already been encoded. Unlike the latent 1110, a signal 1120 that is encoded by two different codecs comprises 2 parts. The first part, 1121, is encoded by the other codec. The second part, 1122, is encoded by a hybrid INR model. In such a case, only part 1122 of the signal is covered by the latent grid. This is illustrated by 1130. The latent values close to the part of the signal encoded by the other codec 1121 will have a smaller context than in the case where the full signal is covered by the latent value, potentially leading to a worse estimate of their probability distributions and therefore a more costly encoding in terms of bit rate. Advantageously, some so-called pseudo latent values are generated to take the place of the missing latent values by a pseudo latent value generation module 1145. These pseudo latent values can then be used within the context to predict an estimate of the probability distributions of the latent values that are actually encoded. According to different embodiments, multiple pseudo latent values generation methods may be used.

In a first embodiment, the pseudo latent values may be set to a default value that may be known to the decoder or signaled in the bitstream.

In a second embodiment, the pseudo latent values may be obtained by applying a function to the decoded part 1141 of the signal that was encoded by the other codec. This function may be optimized or chosen by the encoder and signaled to the decoder or a function known to both. Such a function could for example be a machine learning model trained specifically for this task or an image processing algorithm. Even if the function is known to both coding sides, the encoder may signal it in the bitstream whether the encoder is allowed to choose one of several functions.

In a third embodiment, the pseudo latent values may be obtained by computing the latent values that the hybrid INR model would have used to encode the decoded part 1121 of the signal that was encoded by the other codec. The motivation behind this embodiment is to obtain pseudo latent values that are as coherent as possible with what the hybrid INR model would have used. Computing the pseudo latent values according to this embodiment may involve backpropagation. One possible approach is to train only the latent values of the hybrid INR model with the PP network and the synthesis network fixed, using the procedure described above. In another approach, the loss may be modified for example by only keeping the distortion term. The decoder must be able to precisely reproduce this computation. Therefore, the encoder may signal various parameters of the training procedure in the bit stream. These parameters may include the initialization of the latent values, the number of iterations, a threshold on the loss function to stop the computation and/or the configuration of the loss function, such as the weight of the different terms of the loss function.

In some embodiments, only some parts of the signal could use the present principles while others would not use pseudo latent. In some embodiments, the three options described in the previous paragraph could be combined and selectively activated for different parts of the signal. Multiple functions may also be signaled and used for different parts of the signal.

In some embodiments, pseudo latent values may only be generated on a limited area of the signal parts that are encoded by the other codec. This limited area may, for example, comprises the neighborhood of the signal parts encoded by a hybrid INR model. This is illustrated by 1150, where the only pseudo latent values generated are at most at two latent values positions from areas encoded using hybrid INR. Additional signaling may be added to the bitstream in this case, such as the size or the shape of the neighborhood or more generally information about the shape of that limited area or how to obtain it.

In some embodiments, the signal parts may be coding units of a same frame, for instance an I-Frame. In some other embodiments, the signal parts could be different frames, e.g. when the context contains latent values from other frames.

In some embodiments, the pseudo latent values may be used to decode latent values used by another coding algorithm than hybrid INR. An example of such another coding algorithm may be auto-encoder based methods.

In the following, an embodiment of an encoding method and an embodiment of a decoding method are described with more details. The encoding method and the decoding method may be easily adapted by the skilled in the art to comply with any of the variant embodiments proposed above, such as the signaling or not of the latent generation function in the bitstream in a non-limiting example.

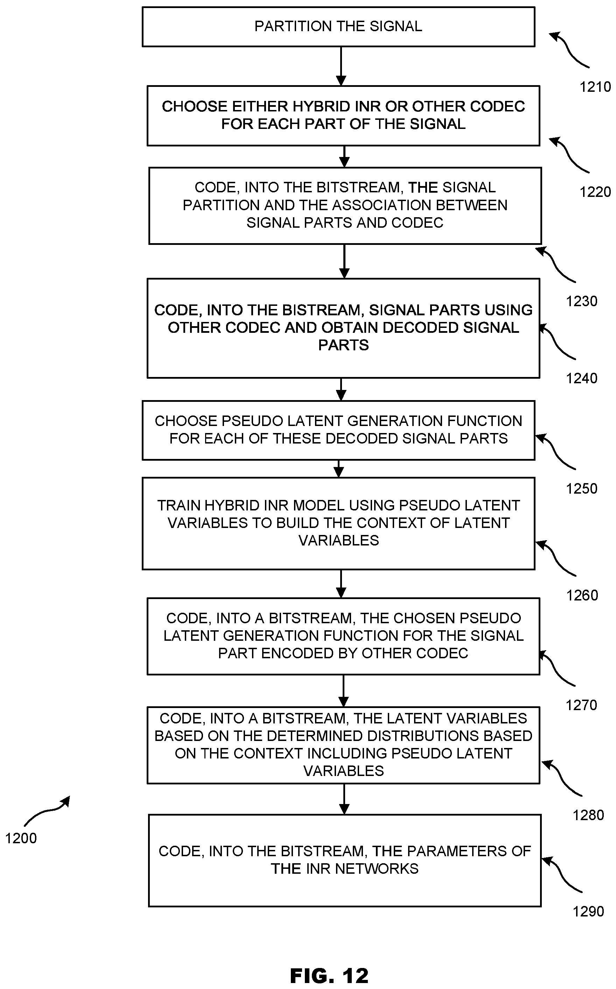

FIG. 12 is a block diagram illustrating an encoding method according to one or more embodiments of the present disclosure. The following encoding method 1200 may be used to encode a signal (or a segment of a signal). The described order and/or use of specific steps in the encoding method are illustrative and may be modified or combined. The signal may be a video sequence comprising one or more frames.

In a first step 1210, the signal (e.g., a frame) is divided into a plurality of parts. For instance, the signal is partitioned into parts or coding units (CU). Examples of possible choices include fixed-size window, quadtree, superpixels, binary-tree, ternary-tree partitioning or Multi-Type Tree. Many approaches are possible to partition the signal into coding tree units. A brute force approach is possible, where all possible partitions are considered. Another possible approach is a greedy search where an initial CU covering the whole signal is incrementally divided by evaluating the impact of a CU split and splitting is done if the impact in terms of rate/distortion is positive. In other words, a CU is split further if its encoding (together with its associated latent grids) is less advantageous in terms of rate distortion than encoding its children. It is also possible to build the CU partition without encoding them. As an example, both a brute force or a greedy search approach could optimize other characteristics of the CUs, such as pixel mean, variance, texture and/or any other statistics of the signal within the considered CUs. Another possible approach is to use a segmentation algorithm that uses the characteristics of the image to choose a good partitioning, including segmentation algorithm based on machine learning.

In a second step 1220, the encoding method determines, for each part of the signal, whether a hybrid INR or a core codec is used for coding the part of the signal. Accordingly, the step 1220 associates either a hybrid INR model or another codec to each part of the signal. It may involve evaluating the performance of a hybrid INR model and of the core codec on this part of the signal, comparing these performances on this and on other parts of the signal, choosing to use the hybrid INR model or the core codec directly based on the characteristics of this part of the signal, for example through an expert designed algorithm or a machine learning model. As an example, a brute force approach may encode each coding unit by both codecs and evaluate their performance in terms of bitrate and distortion and select the particular codec that minimizes the cost associated to the encoding and reconstruction of that part of the signal.

In a third step 1230, information representative of the signal partitioning and, an indication, for each part of the signal, of whether the hybrid INR or the core codec is used for coding the respective part of the signal are encoded in the bitstream, where the bitstream is conformant with the core codec. Encoding the partition and the association between signal parts and the codecs into the bitstream may involve the use of entropy coders. According to a particular variant, the partitioning syntax of the core codec may be used for that step. The core codec may be a video coding standard, for example, HEVC or VVC.

In a fourth step 1240, the signal parts that use the core codec are coded into the bitstream with the associated syntax. Besides, in step 1240, the respective decoded (or reconstructed) signal parts are generated. At the decoder, only decoded version of signal parts coded by the core codec will be available. The goal of this step 1240 is to make those same versions available to the encoder. To do so, those signal parts encoded by the core codec may be encoded and decoded. The resulting bitstreams might be kept to be included in the output bitstream and e.g. stored for later use or transmitted to the decoder.

In a fifth step 1250, a pseudo latent generation function is determined for the respective reconstructed signal parts, then pseudo latent variables may be generated by applying the pseudo latent generation function to the respective decoded signal parts. The encoder chooses one method to generate the pseudo latent values, for example one of the first, second or third embodiments described above. It may for example involve estimating (e.g. by using a machine learning model or other evaluation method) the performance of different embodiments to generate useful pseudo latent, comparing these estimated performances on this and on other parts of the signal, choosing the best approach directly based on the characteristics of this part of the signal, for example through an expert designed algorithm or a machine learning model.

In the following step 1260, a Hybrid INR model is trained. For instance, the Hybrid INR model is trained to generate the context to predict the latent values, using pseudo latent values generated by the function determined in the previous step for the part of the signal encoded by the other codec. The skilled in the art will appreciate that, this is otherwise the same procedure as training a hybrid INR model as previously described. Typically, the full INR model is trained together, including the up-sampling networks, the synthesis networks, the latent values and the autoregressive model (or other PP model) yielding a probability distribution over the latent values. In another variant, the hybrid INR model may be trained in multiple steps, by training the model components one by one. In some variants, training may involve quantization aware training. The training procedure may also involve steps to account for the coding of the probability model, such as quantization, pruning etc., for example by applying these steps, using additional noise and/or adding specific terms to the loss function such as the rate of the network parameters. The function chosen to generate the pseudo latent values may also be fine-tuned or otherwise adjusted during or after this step.

Finally, information representative of the determined pseudo latent generation function, information representative of latent variables and parameters of the hybrid INR for the signal parts that use the hybrid INR are respectively encoded into the bitstream in steps 1270, 1280, 1290. In step 1270, the chosen approach to generate pseudo latent values for each part of the signal encoded by the other codec is coded in the bitstream including any parameter the decoder should know, for example as a default pseudo latent value, the identifier or the parameters of a function used to generate the pseudo latent values, the parameters of the training algorithms such as the initialization of the latent values, the number of iterations, a threshold on the loss function to stop the computation and/or the configuration of the loss function, such as the weight of the different terms of the loss function. This may involve the use of an entropy coder. If the pseudo latent generation function involves a neural network unknown to the decoder, this is typically transmitted from the encoder to the decoder by a neural compression codec such as Neural Network Coding (NNC)/ ISO/IEC 15938-17 or MPEG-7 part 17 or simply by quantizing the weights and/or pruning some neurons from the network(s). In step 1280, the Hybrid INR parameters are encoded. The latent values may be coded by an entropy coder, based on the discrete probability distribution over the quantized latent features given by the autoregressive model (or other model) based at least in part on the pseudo latent values. This may involve quantization of the latent features if this was not done before. In 1290, the neural networks (probability model, synthesis and/or up-sampling models) of the hybrid INR models are encoded in a bitstream. If the model involves a neural network, this is typically done by a neural compression codec such as Neural Network Coding (NNC)/ ISO/IEC 15938-17 or MPEG-7 part 17 or simply by quantizing the weights and/or pruning some neurons from the network(s).

The procedure above describes a sequential approach to solve the aforementioned optimization problem. There are many possible variants of this procedure in addition to those listed above. For example, several elements could be optimized at the same time. The partition, the association between coding units and codecs, the choice of pseudo latent generation function and their parameters and/or the hybrid INR models may be optimized together using any optimization algorithm such as greedy search, gradient descent of a specific loss, genetic algorithms, the use of machine learning algorithms etc. As another example, associating a codec to a coding unit could be based at least partially on the result of the encoding of a previous coding unit with the same or different codec, for example using a reinforcement learning or an active learning algorithm. In yet another example, one or multiple steps may also involve some computation that can be beneficial or reused for another step. Some approaches for partitioning the signal, choosing the codec associated to a coding unit or choosing a pseudo latent generation function may require the computation and the evaluation of hybrid INR models. In that case, these computations may be reused in the other step or the results of that other step may be directly obtained from said computation or the two steps merged.

In a variant, the coding units may be processed sequentially and all or part of the procedure described above applied to one or several coding units before moving to the next one or several coding units.

In a variant, pseudo latent values may only be generated for part of the signal parts encoded by the other codec, typically to save computation if not all pseudo latent values are needed.

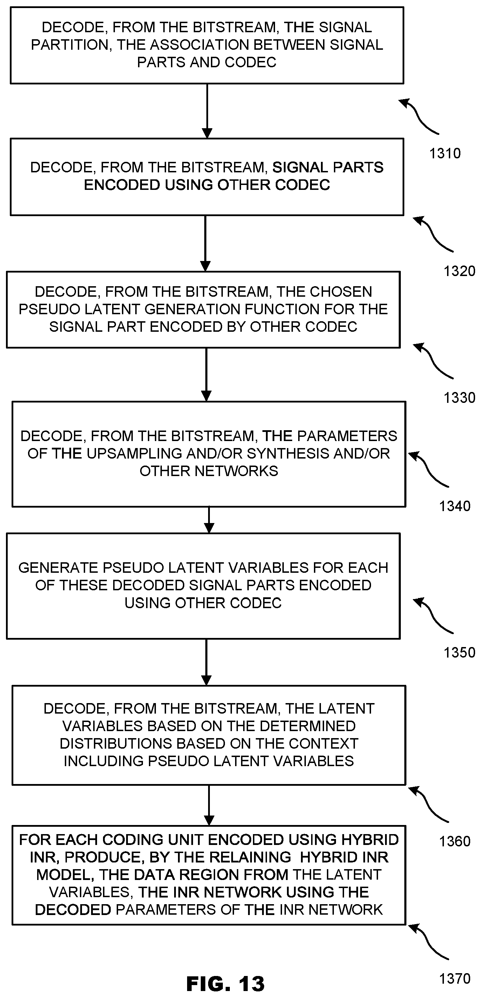

FIG. 13 is a block diagram illustrating a decoding method according to one or more embodiments of the present disclosure. The following decoding method 1300 may be used to decode a coded signal (or a segment of a signal) wherein a core codec is used for coding a part of a signal and a hybrid INR is used for coding another part of the signal. The described order and/or use of specific steps in the decoding method are illustrative and may be modified or combined. The bitstream carrying the coded signal according to method of FIG. 12 may further comprises information representative of a signal partitioning into a plurality of signal parts, an indication of whether a hybrid INR or a core codec is used for coding a respective signal part, information representative of a pseudo latent generation function, information representative of latent variables and parameters of the hybrid INR. The resulting bitstream may be decoded, for example, by the following procedure to firstly decode the latent features.

In a first step 1310, information representative of a signal partitioning into a plurality of signal parts and the indication of whether a hybrid INR or a core codec is used for coding a respective signal part are decoded.

In a second step 1320, the signal parts that were coded using the core codec are decoded.

In a step 1330, information representative of a pseudo latent generation function is decoded from the bitstream, thus allowing a decoder to determine the chosen approach to generate pseudo latent values for each part of the signal encoded by the core codec along with any parameter the decoder should know, for example as a default pseudo latent value, the identifier or the parameters of a function used to generate the pseudo latent values, the parameters of the training algorithms such as the initialization of the latent values, the number of iterations, a threshold on the loss function to stop the computation and/or the configuration of the loss function, such as the weight of the different terms of the loss function. This may involve the use of an entropy decoder.

In step 1340, from the bitstream, parameters of the hybrid INR are decoded from the bitstream. Thus, neural networks (e.g. probability model such as an auto-regressive model, synthesis and/or up-sampling models) are obtained. This is typically done by decoding these models from the bitstream, but some or all models may already be available to the decoder, for example because some or all models have been used for another part of the signal or are transmitted separately.

In step 1350, pseudo latent values are generated by applying the pseudo latent generation function to generate pseudo latent values on each part of the signal coded by the core codec. This pseudo latent generation function may be parameterized by the decoded parameters. If they are not needed to generate the context, latent values may only be generated for part of the coding units.

Latent values are decoded 1360 from the bitstream, for example using the auto-regressive or other probability model and an entropy decoder as in any hybrid INR method and described above. The auto-regressive or other probability model uses the pseudo random variables inside the context when appropriate, i.e. when the context location as illustrated in Figure 8 falls over parts of the signal encoded by the other codec.

In step 1370, the signal parts that use the hybrid INR responsive to the indication that a hybrid INR is used for coding the respective signal part, are obtained from the decoded latent variables, a hybrid INR model using the decoded parameters of the hybrid INR. These latent features can then be used to decode the signal following the usual process for hybrid INR models: The decoded features may be upsampled. This may require using the upsampling network decoded from the bitstream. The upsampled features may be used by the synthesis network to decode the signal. For 2D images or video, the output of the synthesis network would typically be pixel colors. For 3D scene, the output would typically be color and density of a voxel. For a 3D surface (e.g. hologram), it may be a signed or unsigned distance to the surface. In some variants, the concatenation step may be omitted, for example when up-sampled decoded features of all levels are directly stored in a single tensor.

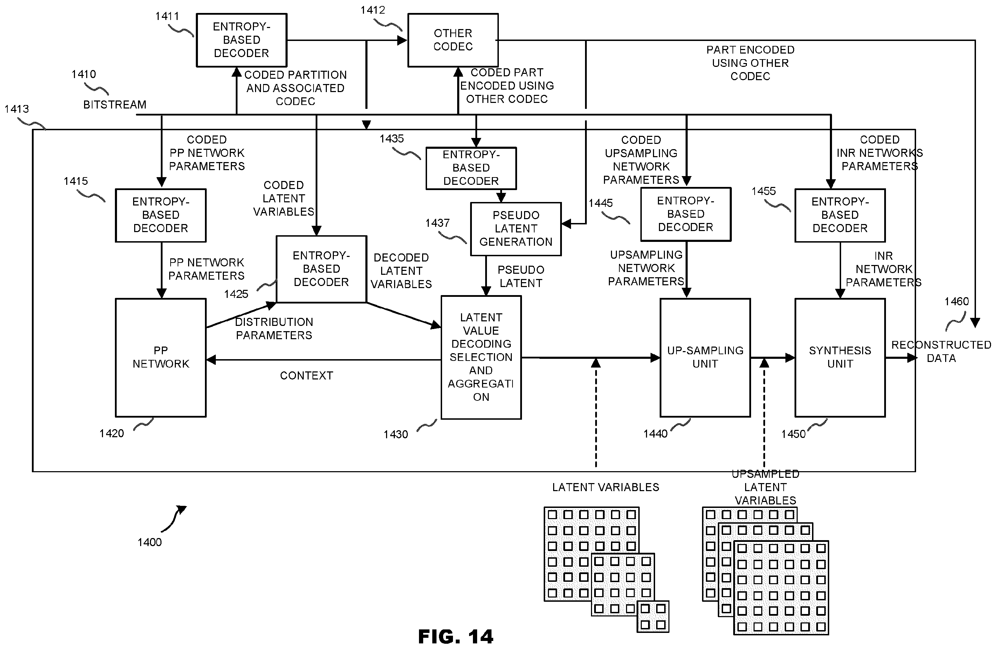

FIG. 14 is a block diagram illustrating a decoding method according to one or more embodiments of the present disclosure. In the example of FIG. 14, it is shown how the pseudo latents may be used to decode a signal with a particular hybrid INR model, the decoded latent features may be used to decode the signal as in the COOL-CHIC algorithm. The decoder 1400 includes entropy-based decoders 1411, 1415, 1425, 1435, 1455, 1455. The entropy decoder 1411 first decodes the partition and the codec associated to each part of the signal from the bitstream. Based on this information, the core codec 1412 or the hybrid INR codec 1413 are used to decode the corresponding parts of the signal. The core codec 1412 produces decoded parts of the signal.

The hybrid INR model includes a PP network 1420, an up-sampling unit 1440, an INR network 1450.

The entropy-based decoder 1435 decodes, from the bitstream, the chosen approach to generate pseudo latent values for each part of the signal encoded by the other codec along with any parameter the decoder should know, for example as a default pseudo latent value, the identifier or the parameters of a function used to generate the pseudo latent values, the parameters of the training algorithms such as the initialization of the latent values, the number of iterations, a threshold on the loss function to stop the computation and/or the configuration of the loss function, such as the weight of the different terms of the loss function, if they are not known to the decoder. These parameters are used to configure a pseudo latent generation module 1437. This module takes as input the parts of the signal decoded by the other codec and generates pseudo latent. These pseudo latent variables are then provided to the latent value decoding selection and aggregation module 1430 to be included in a context to decode the latent values, when appropriate. In a variant (not shown), these pseudo latents are generated on request from the latent value decoding selection and aggregation module 1430.

This module 1430 triggers the decoding of the latent values encoded in the bitstream by querying the PP network 1420 with a context composed of already obtained latent values and/or pseudo latent values to produce the distribution parameters of the currently decoded latent variable (as further described in reference to FIG. 8).

The PP network 1420 operates based on learned PP network parameters ψ, determined during the training of the PP network 620. The entropy-based decoder 1415 decodes these PP network parameters from the bitstream 1410. Based on the produced 1420 distribution parameters, the entropy-based decoder 1425 decodes the identified latent variables from the bitstream 1410. These decoded latent variables are then provided to the latent value decoding selection and aggregation module 1430 to be set at the right location in the grid of latent values. The decoded latent variables are then upsampled by the up-sampling unit 1440 (as performed by the up-sampling unit 640 at the encoder 600). This network is parameterized by the parameter decoded from the bitstream 1410 by the entropy-based decoder 1445. Fed by the up-sampled latent variables, the INR network 1450 reconstructs the data 1460 (e.g., coding units of a reconstructed image of a video frame) it is trained to synthesize based on the INR network parameters, decoded from the bitstream 1410 by the entropy-based decoder 1455.

In a variant, the signal part coded by hybrid INR may be decoded part by part (or groups of parts by groups of part) using the grids decoded for each part. The signal is then reconstructed by concatenating the signal part together, based on the position of the different parts.

In a variant, the coding units may be processed sequentially and all or part of the procedure described above applied to one or several coding units before moving to the next one or several coding units.

In a variant, pseudo latent values may only be generated for part of the signal parts encoded by the other codec, typically to save computation if not all pseudo latent values are needed. They may also be generated on the fly as needed and potentially stored in temporary memory.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method, comprising :
partitioning (1210) a signal into a plurality of parts;
determining (1220), for each part of the signal, whether a hybrid INR or a core codec is used for coding the part of the signal;
encoding (1230), into a bitstream, information representative of the signal partitioning and encoding, for each part of the signal, an indication of whether the hybrid INR or the core codec is used for encoding the respective part of the signal;
encoding (1240), into the bitstream, the signal parts that use the core codec and obtain respective decoded signal parts;
determining a pseudo latent generation function for the respective reconstructed signal parts (1250) and obtaining pseudo latent variables by applying the pseudo latent generation function to the respective decoded signal parts;
training (1260) a hybrid INR model using pseudo latent variables to generate latent variables and parameters of the hybrid INR for the signal parts that use the hybrid INR; and
encoding (1270, 1280, 1290), into the bitstream, information representative of the determined pseudo latent generation function, information representative of latent variables and parameters of the hybrid INR for the signal parts that use the hybrid INR.

2. An apparatus, comprising one or more processors, wherein said one or more processors is operable to:
partition (1210) a signal into a plurality of parts;
determine (1220), for each part of the signal, whether a hybrid INR or a core codec is used for coding the part of the signal;
encode (1230), into a bitstream, information representative of the signal partitioning and encode, for each part of the signal, an indication of whether the hybrid INR or the core codec is used for encoding the respective part of the signal;
encode (1240), into the bitstream, the signal parts that use the core codec and obtain respective decoded signal parts;
determine a pseudo latent generation function for the respective reconstructed signal parts (1250) and obtain pseudo latent variables by applying the pseudo latent generation function to the respective decoded signal parts;
train (1260) a hybrid INR model using pseudo latent variables to generate latent variables and parameters of the hybrid INR for the signal parts that use the hybrid INR; and
encode (1270, 1280, 1290), into the bitstream, information representative of the determined pseudo latent generation function, information representative of latent variables and parameters of the hybrid INR for the signal parts that use the hybrid INR.

3. A method, comprising
obtaining a bitstream carrying an coded signal wherein a core codec is used for coding a part of a signal and an hybrid INR is used for coding another part of the signal, the bitstream further comprising information representative of a signal partitioning into a plurality of signal parts, an indication of whether an hybrid INR or a core codec is used for coding a respective signal part, information representative of a pseudo latent generation function, information representative of latent variables and parameters of the hybrid INR;
decoding (1320), from the bitstream, the signal parts that use the core codec responsive to the indication that a core codec is used for coding the respective signal part;
decoding (1340), from the bitstream, parameters of the hybrid INR;
obtaining (1330, 1350) pseudo latent variables by applying the pseudo latent generation function to the decoded signal parts that use the core codec;
decoding (1360), from the bitstream, latent variables using pseudo latent variables;
obtaining (1370), the signal parts that use the hybrid INR responsive to the indication that a hybrid INR is used for coding the respective signal part, from the decoded latent variables, a hybrid INR model using the decoded parameters of the hybrid INR.

4. An apparatus, comprising one or more processors, wherein said one or more processors is operable to:
obtain a bitstream carrying an coded signal wherein a core codec is used for coding a part of a signal and an hybrid INR is used for coding another part of the signal, the bitstream further comprising information representative of a signal partitioning into a plurality of signal parts, an indication of whether an hybrid INR or a core codec is used for coding a respective signal part, information representative of a pseudo latent generation function, information representative of latent variables and parameters of the hybrid INR;
decode (1320), from the bitstream, the signal parts that use the core codec responsive to the indication that a core codec is used for coding the respective signal part;
decode (1340), from the bitstream, parameters of the hybrid INR;
obtain (1330, 1350) pseudo latent variables by applying the pseudo latent generation function to the decoded signal parts that use the core codec;
decode (1360), from the bitstream, latent variables using pseudo latent variables;
obtain (1370), the signal parts that use the hybrid INR responsive to the indication that a hybrid INR is used for coding the respective signal part, from the decoded latent variables, a hybrid INR model using the decoded parameters of the hybrid INR.

5. The method of any of claims 1 or 3, or the apparatus of any of claims 2 or 4, wherein the pseudo latent generation function sets the pseudo latent variables to default values.

6. The method of any of claims 1 or 3, or the apparatus of any of claims 2 or 4, wherein the pseudo latent generation function is determined among at least one of a predetermined function, a function optimized at the encoding, a machine learning model trained at the encoding, an image processing function.

7. The method of any of claims 1 or 3, or the apparatus of any of claims 2 or 4, wherein the pseudo latent generation function determines the latent values that the hybrid INR would have used for coding signal parts that use the core codec.

8. The method of any of claims 1, 3, 5 to 7, or the apparatus of any of claims 2, 4 to 7, wherein the pseudo latent generation function is applied to an area of the decoded signal parts that use the core codec, the area neighboring signal parts that use the hybrid INR or the area associated to latent values used as context when decoding latent values of signal parts that use the hybrid INR.

9. The method of any of claims 1, 3, 5 to 8, or the apparatus of any of claims 2, 4 to 8, wherein the signal is a video sequence comprising one or more frames and wherein a signal part is a coding unit of a same frame.

10. The method of any of claims 1, 3, 5 to 8, or the apparatus of any of claims 2, 4 to 8, wherein the signal is a video sequence comprising one or more frames and wherein a signal part is a frame.

11. The method of any of claims 1, 5 to 8, or the apparatus of any of claims 2, 5 to 8, wherein encoding (1270, 1280, 1290), into the bitstream, information representative of latent variables comprises entropy encoding the latent variables by determining probability distributions based on a spatial context including the pseudo latent variables.

12. The method of any of claims 3, 5 to 8, or the apparatus of any of claims 4 to 8, wherein decoding (1360), from the bitstream, latent variables using pseudo latent variables comprises entropy decoding the latent variables by determining probability distributions based on a spatial context including the pseudo latent variables.

13. A bitstream comprising a coded signal wherein a core codec is used for coding a part of a signal and an hybrid INR is used for coding another part of the signal, the bitstream further comprising information representative of a signal partitioning into a plurality of signal parts, an indication of whether an hybrid INR or a core codec is used for coding a respective signal part, information representative of a pseudo latent generation function, information representative of latent variables and parameters of the hybrid INR.

14. A computer program comprising program code instructions for implementing the method according to any of claims 1, 3, 5 to 12 when executed by a processor.
